Europäisches Patentamt

European Patent Office

Office européen des brevets

(19)

(11) Publication number: 0 612 892 A1

## EUROPEAN PATENT APPLICATION
## published in accordance with Art. 158(3) EPC

(12)

(21) Application number: 92923182.7

(22) Date of filing: 06.11.92

(86) International application number:
PCT/JP92/01437

(87) International publication number:
WO 93/09302 (13.05.93 93/12)

(51) Int. Cl.⁵: E02F 9/16

(30) Priority: 06.11.91 JP 318411/91
29.01.92 JP 8456/92 U

(43) Date of publication of application:
31.08.94 Bulletin 94/35

(84) Designated Contracting States:
DE GB

(71) Applicant: KABUSHIKI KAISHA KOMATSU
SEISAKUSHO
3-6, Akasaka 2-chome
Minato-ku Tokyo 107 (JP)

(72) Inventor: KIMOTO, Kenzo

Komatsu Osaka Plant
1-1, Ueno 3-chome
Hirakata-shi Osaka 573 (JP)
Inventor: YANAGISAWA, Masakazu
Komatsu Osaka Plant
1-1, Ueno 3-chome
Hirakata-shi Osaka 573 (JP)

(74) Representative: Meissner, Peter E., Dipl.-Ing.
et al
Meissner & Meissner,
Patentanwaltsbüro,
Hohenzollerndamm 89
D-14199 Berlin (DE)

(54) RESILIENT SUPPORTING DEVICE FOR OPERATOR CABIN.

(57) A shock absorbing device provided with a damping plate damper comprises a viscosity damper including: a case body consisting of an upper flange, a body portion and a lower flange; a resilient member provided with a collar, an outer surface of a body portion thereof and the undersurface of a collar portion thereof being connected to the above-described case body; a center shaft connected to the central portion of the resilient member provided with the collar; a damping plate fixed to the bottom end portion of the center shaft; and a viscous substance filled up in a damper case fixed to the bottom end of the above-described case body. An operator cabin of a construction machine is resiliently supported on a machine body through this shock absorbing device. For this reason, the number of natural vibration of the operator cabin during high speed running of a hydraulic power shovel is increased, whereby resonance thereof with the mesh-up frequencies by a caterpillar band and a sprocket wheel is avoided, so that effective damping effects can be achieved against the number of vibrations applied in wide ranges by the construction machines and the like, thus improving riding comfort for an operator and the mechanical strength of the operator cabin.

EP 0 612 892 A1

FIG. 2

TECHNICAL FIELD

The invention relates to an operator cabin placed to construction machines such as a hydraulic power shovel, more particularly, to a resilient supporting device for resiliently supporting an operator cabin against a car body.

BACKGROUND ART

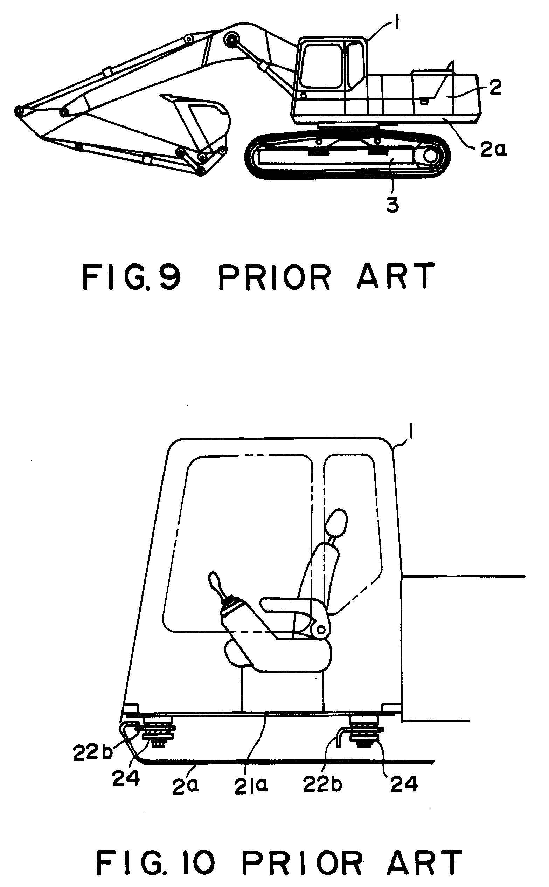

Fig. 9 is a side view showing the appearance of a typical hydraulic power shovel applied to general use, including an operator cabin 1, an upper turning body 2, an upper turning body frame 2a and a lower traveling body 3.

Fig. 10 is a longitudinal section showing the relation of placement between the operator cabin 1 and the upper turning body frame 2a, in which a floor plate 21a of the operator cabin 1 is fixed by a shock absorbing device 24 to a supporting frame 22b to which the upper turning body frame 2a is welded.

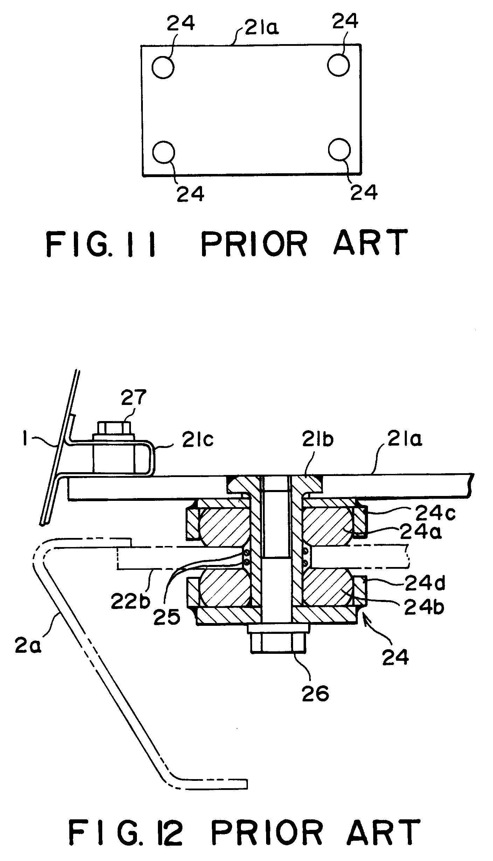

Fig. 12 is a longitudinal section showing the detail of the related connection between the floor plate 21a and the supporting frame 22b fixed by the shock absorbing device 24. In Fig. 12, a resilient member 24a filled up in a case 24c, which is arranged between the floor plate 21a and the supporting frame 22b, and a resilient member 24b filled up in a case 24d sandwich the supporting frame 22b therebetween, a floor boss 21b welded on the floor plate 21a penetrates the case 24c, the resilient member 24a, the case 24d and the resilient member 24b, and then a bolt 26 is fastened to the floor boss 21b, so that a predetermined amount of space for tightening are given between the resilient members 24a and 24b and the floor plate 21a and the supporting frame 22b are assembled. Also, the floor plate 21a is fastened to a blacket 21c welded on the frame of the operator cabin 1 by a bolt 27.

In this manner, as shown in Fig. 11, four shock absorbing devices 24 are placed in both corners of the back and forth sides of the operator cabin 1, resilient members 25 are put between the periphery of the floor boss 21b and holes to which the supporting frames 22b are attached, so that the operator cabin 1 can be resiliently located in the horizontal surface against the upper turning body frame 2a. However, in the prior art mentioned above, since the floor plate 21a of the operator cabin 1 is connected to the supporting frame 22b of the upper turning body 2 by the four shock absorbing devices 24, the number of natural vibrations of the operator cabin 1 becomes small, whereby the number of natural vibrations of the operator cabin 1 during high speed running of a hydraulic power shovel becomes close to mesh-up frequencies provided by a caterpillar band and a sprocket wheel, so that the operator cabin 1 has resonated therewith. For this reason, the vibration of the operator cabin 1 is increased, especially rolling from side to side is increased, whereas the main object of the above-mentioned prior art is to provide shock absorbing effects by the shock absorbing device 24 and damping effects against increased vibrations produced by resonance of the operator cabin 1 are not effective, thus deteriorating riding comfort for an operator during high speed running and the mechanical strength of the operator cabin 1.

Therefore, the object of the present invention is to solve the above-mentioned problems and provide the resilient supporting construction of the operator cabin 1 against the car body to reduce vibrations particularly during high speed running of the hydraulic power shovel and prevent trailing turns of rubbers during assembly of the shock absorbing device 24.

BRIEF DESCRIPTION OF THE DRAWINGS

Fig. 1 is a longitudinal section of a first embodiment according to the present invention, showing the overview of related placement of a shock absorbing device provided with a damping plate damper 4 to an upper turning body frame 2a and an operator cabin 1.

Fig. 2 is a detailed longitudinal section of a shock absorbing device with a damping plate damper 4 shown in Fig. 1, showing related connection between a floor plate 1a of an operator cabin 1 and a supporting frame 2b of an upper turning body frame 2a.

Fig. 3 is a comparison graph showing vibration transfer characteristics of a shock absorbing device with a damping plate damper of an operator cabin according to each embodiment of the present invention and a rubber mount according to the prior art.

Fig. 4 is a comparison graph showing loss factors of a shock absorbing device with a damping plate damper of an operator cabin according to each embodiment of the present invention and a rubber mount according to the prior art.

Fig. 5 is a longitudinal section, similar to Fig. 2, showing a shock absorbing device with a damping plate damper according to a second embodiment of the present invention.

Fig. 6 is a cross-sectional view, taken on line A-A of Fig. 5.

Fig. 7 is a longitudinal section, similar to Fig. 2, showing a shock absorbing device with a damping plate damper according to a third embodiment of the present invention.

Fig. 8 is a cross-sectional view, taken on line B-B of Fig. 7.

Fig. 9 is a side view showing the appearance of a typical hydraulic power shovel.

Fig. 10 is a longitudinal section showing the relation of placement between an operator cabin 1 and an upper turning body frame 2a shown in Fig. 9 according to the prior art.

Fig. 11 is a plan view showing locations of shock absorbing devices 24 shown in Fig. 10.

Fig. 12 is a detailed longitudinal section showing a shock absorbing device 24 and vicinity shown in Fig. 10.

## DISCLOSURE OF THE INVENTION

The first aspect of the present invention is to provide a resilient supporting device for resiliently supporting an operator cabin against a car body, the device in which the operator cabin of a construction machine is placed on the car body through a shock absorbing device with a damping plate damper, so that remarkable shock absorbing and damping effects can be achieved against the number of excited vibrations applied in wide ranges by the construction machine.

The second aspect of the present invention is to provide a shock absorbing device with a damping plate damper having a viscosity damper according to the first aspect of the present invention including: a case body consisting of an upper flange, a body portion and a lower flange; a resilient member provided with a collar, an outer surface of a body portion thereof and an undersurface of a collar portion thereof being connected to the case body; a center shaft connected to the central portion of the resilient member provided with the collar; a damping plate fixed to the bottom end portion of the center shaft; and a viscous substance filled up in a damper case fixed to the bottom end of the case body; whereby the operator cabin is fixed the upper portion of the center shaft and supported on the upper surface of the collar portion of the resilient member provided with the collar. For this reason, effective shock absorbing and damping effects in the upper and lower side direction can be achieved against the number of excited vibrations applied in wide ranges by the construction machines and the like. Moreover, the center shaft which fixes the operator cabin on the upper portion thereof resiliently supports a slope against the vertical by the collar portion and the body portion of the resilient member provided with the collar, whereby rolling vibrations in every side direction can be certainly reduced.

The third aspect of the present invention is to provided a shock absorbing device with a damping plate damper having a viscosity damper according to the second aspect of the present invention, the device wherein a lower resilient stopper is connected to the case body for controlling lower movement of said operator cabin which has a predetermined space to the periphery of the collar portion of the resilient member provided with the collar and an upper resilient stopper for controlling upper movement of the operator cabin is connected to the upper surface of the damping plate. Therefore, after moving downwardly and striking the lower resilient stopper, the operator cabin moves downwardly in a state of spring constant increasing, while moving upwardly and striking the upper resilient stopper, the operator cabin moves upwardly in a state of spring constant increasing, whereby remarkable shock absorbing effects can be achieved in upper and lower movement of the operator cabin. Thus, according to the first to third aspects of the present invention, remarkable effects can be obtained as follows:

(1) Since effective shock absorbing and damping effects are achieved against the number of excited vibrations applied in wide ranges by the construction machines and the like, riding comfort for an operator and the durability of the operator cabin can be improved without only one of devices being adjusted in response to the number of excited vibrations in wide ranges.

(2) Without only one of devices being adjusted in response to the number of excited vibrations applied in wide ranges by the construction machines and the like, effective shock absorbing and damping effects in the upper and lower side direction are achieved and moreover, rolling vibrations in every side direction which is a big problem in the prior art can be certainly reduced, so that riding comfort for an operator and the durability of the operator cabin can be remarkably improved.

(3) After striking each resilient stopper, in a state of spring constant increasing, upper and lower movement of the operator cabin is controlled, whereby effective shock absorbing effects can be functioned to the operator cabin, thus improving riding comfort for an operator and the durability of the operator cabin.

The fourth aspect of the present invention is to provided a shock absorbing device with a damping plate damper having a viscosity damper including: a case body consisting of an upper flange, a body portion and a lower flange; a resilient member provided with a collar, an outer surface of a body portion thereof and an undersurface of a collar portion thereof being connected to the case body; a center shaft connected to the central portion of the resilient member provided with the collar; a damping plate fixed to the bottom end portion of the center shaft; and a viscous substance filled up in a damper case fixed to the bottom end of the case body; whereby the collar portion of the resilient member provided with a collar and the operator cabin are fixed to each other through a spacer by the center shaft and the upper flange of the case body is fixed to the car body; the improvement wherein the fit portion of the spacer and the center shaft has a width across flats and a turning prevention device for preventing twists adjacent to the center shaft of the spacer is provided.

The fifth aspect of the present invention is to provided a shock absorbing device with a damping plate damper having a viscosity damper including: a case body consisting of an upper flange, a body portion and a lower flange; a resilient member provided with a collar, an outer surface of a body portion thereof and an undersurface of a collar portion thereof being connected to the above-described case body; a center shaft connected to the central portion of the resilient member provided with the collar; a damping plate fixed to the bottom end portion of the center shaft; and a viscous substance filled up in a damper case fixed to the bottom end of the above-described case body; whereby the collar portion of the resilient member provided with a collar and the operator cabin are fixed to each other through a spacer by the center shaft, the upper flange of the case body is fixed to the car body; the improvement wherein a knock pin is provided between the center shaft and the spacer, and a turning prevention device for preventing twists adjacent to the center shaft of the spacer is provided. Therefore, according to the fourth and fifth aspects of the present invention, trailing turns are prevented during tightening by an impact wrench, whereby the twists of the resilient member can be avoided, thus enabling certain fastening by the impact wrench and preventing inconveniences provided by flexure. Furthermore, such a mechanism can improve the durability of the rubber mount and facilitate to place the turning prevention device adjacent to the center shaft of the spacer.

BEST MODE FOR CARRYING OUT THE INVENTION

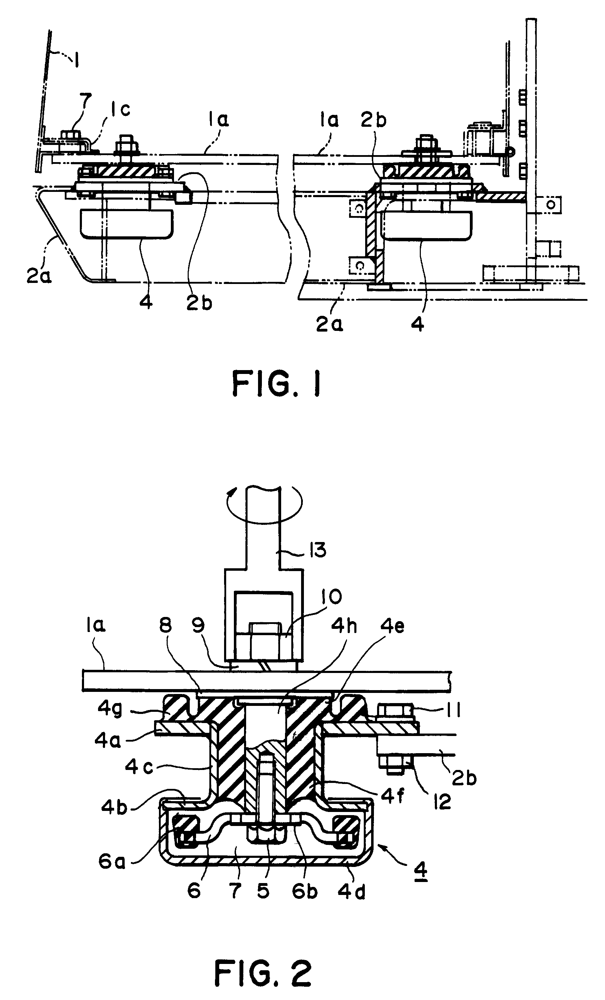

In Fig. 1 showing an embodiment corresponding to claim 1 of the present invention, there are provided a floor plate 1a engaged by a bolt 7 with a blacket 1c welded to an operator cabin 1, a supporting frame 2b welded to an upper turning body frame 2a, a shock absorbing device provided with a damping plate damper 4 for resiliently supporting the floor plate 1a of the operator cabin 1 to the supporting frame 2b to which the upper turning body frame 2a is welded.

In Fig. 2 showing the first embodiment corresponding to claims 2 and 3 of the present invention, the shock absorbing device provided with a damping plate damper 4 includes a case body consisting of an upper flange 4a, a lower flange 4b and a body portion 4c; a resilient member provided with a collar consisting of an resilient member collar portion 4e, a resilient member body portion 4f and an upper resilient stopper portion 4g; a center shaft 4h penetrating a central portion over the resilient member collar portion 4e and the resilient member body portion 4f of the resilient member provided with a collar; a damping plate 6 engaged by a bolt 5 with a lower end of the center shaft 4h; an upper resilient stopper 6a connected to the periphery of an upper surface of the damping plate 6; holes 6b provided on the damping plate 6; and a viscosity damper consisting of silicon oil filled up in a damper case 4d attached to the lower flange 4b.

An undersurface of the resilient member collar portion 4e is connected to an upper surface of the upper flange 4a of the case body, an outer surface of the resilient member body portion 4f is connected to an internal surface of the body portion 4c of the case body and the periphery surface of the center shaft 4h is connected over the resilient member collar portion 4e and the resilient member body portion 4f. The vibration transmissibility T of the viscosity damper is determined in response to the number of or the size of the holes 6b provided on the damping plate 6. In the upper portion of the center shaft 4h, the resilient member collar portion 4e and the operator cabin 1 are fixed to each other through the spacer 8 by engaging a nut 10 through a lock washer 9 with an upper screw portion and the upper flange 4a of the case body is fixed to the supporting frame 2b of the car body by a bolt 11 and a nut 12. Also, an upper surface of the upper resilient stopper 4g placed to the periphery of the resilient member collar portion 4e is fixed to an undersurface of the floor plate 1a of the operator cabin 1 with a predetermined space.

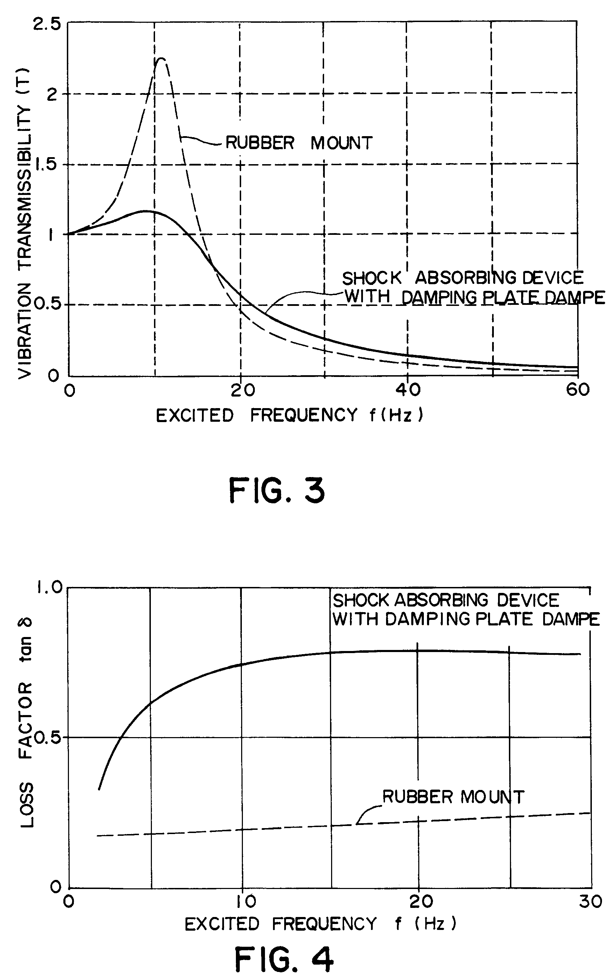

Next, the operation of the first embodiment of the present invention as shown in Figs. 1 and 2 will be described. The weight of the operator cabin 1, in a state of the floor plate 1a of the operator cabin 1 striking on the upper surface of the resilient member collar portion 4e, is supported by compressive force of the resilient member collar portion 4e and shearing force of the resilient member body portion 4f. The center shaft 4h fixed to the floor plate 1a of the operator cabin 1 is supported through the upper flange 4a of the case body by the resilient member provided with the collar to the supporting frame 2b fixed to the car body, thus resiliently supporting the operator cabin 1 to the car body. Therefore, the center shaft 4h which fixes the operator cabin 1 on the upper portion thereof resiliently supports a slope against the vertical by the resilient member collar portion 4e and the resilient member body portion 4f, whereby rolling vibrations in every side direction can be certainly reduced. Also, by the viscosity damper consisting of the damping plate 6 fixed to the lower end of the center shaft 4h and the damper case 4d in which the damping plate 6 and silicon oil 7 are filled up, in response to the number of or the size of the holes 6b provided on the damping plate 6, the vibration transmissibility T of the shock absorbing device provided with a damping plate damper 4 as shown in Fig. 3 is determined. In the construction according to the fist embodiment, not only remarkable damping effects are achieved against the number of excited vibrations which are changed by the conditions of running and operation applied in wide ranges by the construction machines and the like, but also upper and lower movement of the operator cabin 1 can be controlled by each resilient stopper 4g or 6a, whereby the floor plate 1a strikes the lower resilient stopper 4g or the upper stopper 6a strikes the lower flange 4b, in a estate of a spring constant increasing, upper and lower movement of the operator cabin is controlled, so that effective shock absorbing effects can be achieved to the operator cabin 1.

Fig. 3 is a comparison graph showing vibration transfer characteristics T of the shock absorbing device with a damping plate damper according to each embodiment of the present invention and a rubber mount according to the prior art, giving the excited frequency f (Hz) on the axis of abscissa and the vibration transmissibility T on the axis of ordinate. In Fig. 3, according to the prior art shown with break line, the vibration transmissibility T at the excited frequency f being approximately 11Hz is approximately 2.3, while the vibration transmissibility T according to each embodiment of the present invention is approximately 1.2, i.e., it is understood that the vibration transmissibility T according to the present invention is reduced by almost half.

Fig. 4 is a comparison graph showing loss factors of the shock absorbing device with a damping plate damper according to each embodiment of the present invention and a rubber mount according to the prior art, giving the excited frequency f (Hz) on the axis of abscissa and the loss factor (tan δ) on the axis of ordinate. In Fig. 4, the construction of placement of the operator cabin 1 according to the rubber mount of the prior art shown with break line, the loss factors (tan δ) in a range of the excited frequencies f up to 30Hz are set in a range of approximately 0.2 to 0.25, while the loss factors according to each embodiment of the present invention are larger, approximately 0.8 or so, i.e., it is understood that the damping effects according to the present invention are larger than the prior art.

Generally, the relation of the vibration transmissibility T and the loss factor (tan δ) is shown in the following equation.

$$T = \sqrt{\{1 + \tan^2\delta\}}/\sqrt{\{(1\text{-}f/fn)^2 + \tan^2\delta\}} \qquad (1)$$

wherein, f: excited frequency, fn: natural frequency

As shown in Fig. 2, in the upper portion of the center shaft 4h, when the resilient member collar portion 4e and the floor plate 1a of the operator cabin 1 are fixed to each other through the spacer 8 by engaging the nut 10 through a lock washer 9 with the upper screw portion giving a torque in the direction of the arrow by a box spanner 13, rotation force of the center shaft 4h is transmitted to the resilient member collar portion 4e and the resilient member body portion 4f to twist thereof, whereby it may be difficult to completely fasten, and further, since the resilient member collar portion 4e and the resilient member body portion 4f are assembled in a twisted state, there arises another problem that the durability of the resilient member collar portion 4e and the resilient member body portion 4f is deteriorated. Therefore, a knock pin can place between the center shaft 4h and the floor plate 1a of the operator cabin 1 in order to stop turns of the center shaft 4h, whereas a plurality of the shock absorbing devices provided with the damping plate damper 4 are necessary to place, whereby there arise problems that close dimensional tolerances of knock pins are required and the number of processes is increased.

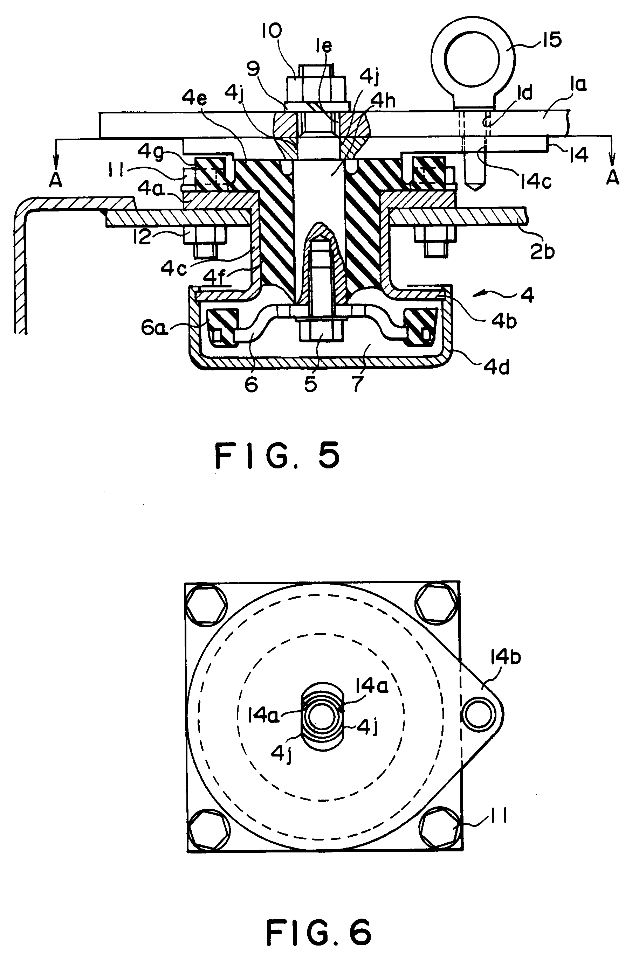

Figs. 5 and 6 are sectional views showing a construction for stopping rotation of the center shaft 4h in order to prevent twists of the resilient member collar portion 4e and the resilient member body portion 4f according to the second embodiment corresponding to claim 4 of the present invention. Hereinafter, referring to Figs. 5 and 6, the second embodiment of the present invention will be described. In addition, since the relation of placement of the shock absorbing device provided with the damping plate damper 4 to the upper turning body frame 2a and the operator cabin 1 is the same as those shown in Fig. 1, a description thereof will be omitted. Also, in the corresponding construction according to the first embodiment of the present invention as shown in Fig. 2, a description thereof will be omitted together with a description of the operation.

As shown in the drawings, the resilient member collar portion 4e is fastened through a spacer 14 to the floor plate 1a of the operator cabin 1 by engaging the nut 10 with a screw portion of the center shaft 4h and the upper flange 4a of the case body is fixed to the car body, so that a resilient supporting device of the operator cabin 1 is provided. In the upper portion of the center shaft 4, a width across flats 4j-4j is formed and put in a width across flats 14a-14a formed on the spacer 14, and then a pin bolt 15 is engaged with a tapped hole 1d provided on the floor plate 1a of the operator cabin 1, whereby the pin portion of the bolt 15 is put in a pin hole 14c formed on a radial projection 14b of the spacer 14, thus preventing rotation of the center shaft 4h. Further, the upper flange portion 4a of the case body is fixed to the supporting frame 2b by the bolt 11 and the nut 12 and the upper surface of the lower resilient stopper 4g is fastened to the undersurface of the spacer 14 with a predetermined space. In addition, since the relation of placement of the shock absorbing device provided with the damping plate damper 4 to the upper turning body frame 2a and the operator cabin 1 is the same as that shown in Fig. 1, a description thereof will be omitted.

Next, the operation of the second embodiment will be described. When the shock absorbing device provided with the damping plate damper 4 attached to the supporting frame 2b of the upper turning body 2a is fixed to the floor plate 1a of the operator cabin 1, the width across flats 4j-4j of the center shaft 4h is put in a slot having the width across flats 14j-14j of the spacer 14, a screw portion of the tip of the center shaft 4h is located relative to a hole 1e of the floor plate 1a and then, the operator cabin 1 is moved downwardly until the upper surface of the spacer 14 contacts with the undersurface of the floor plate 1a.

Also, when the pin bolt 15 is engaged from upper side with the screw portion 1d of the floor plate 1a, the pin portion of the pin bolt 15 is put in the pin hole 14c of the spacer 14. Thereafter, although the floor plate 1a is fastened to the shock absorbing device by engaging the nut 10 through the lock washer 9 with the screw portion of the center shaft 4h, the center shaft 4h can not be turned by the width across flats 14a-14a, 4j-4j and the pin bolt 15, whereby twists of the resilient member collar portion 4e and the resilient member body portion 4f which is produced in the conventional devices can be avoided.

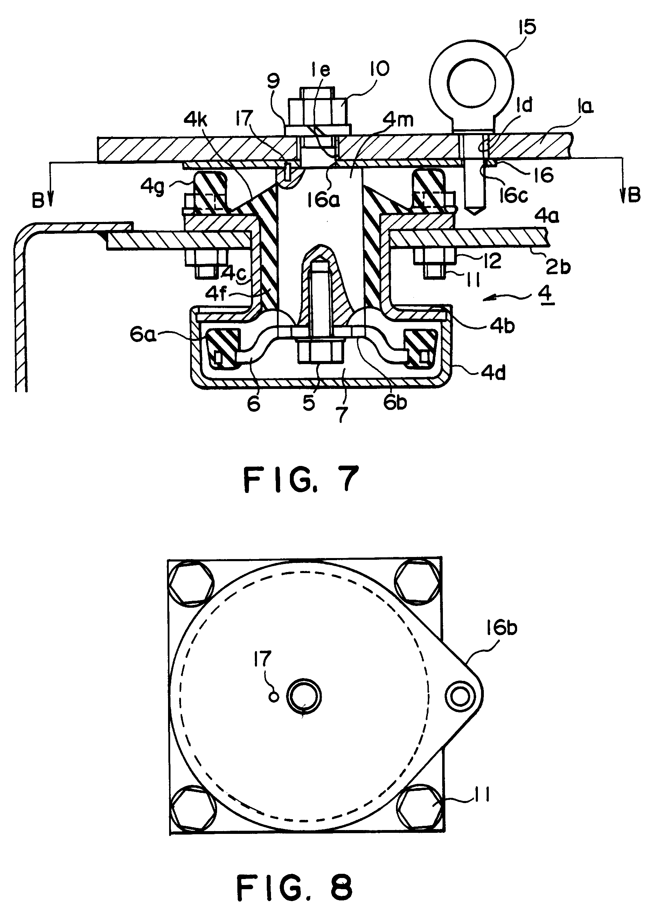

Figs. 7 and 8 are sectional views showing the construction for stopping rotation of a center shaft 4m in order to prevent twists of the resilient member collar portion 4e and the resilient member body portion 4f according to the third embodiment corresponding to claim 5 of the present invention. Hereinafter, referring to Figs. 7 and 8, the third embodiment of the present invention will be described. In addition, since the relation of placement of the shock absorbing device provided with the damping plate damper 4 to the upper turning body frame 2a and the operator cabin 1 is the same as that shown in Fig. 1, a description thereof will be omitted. Also, in the corresponding construction according to the first embodiment of the present invention as shown in Fig. 2, a description thereof will be omitted together with a description of the operation.

An upper surface of a collar portion 4k of a resilient member provided with a collar is different from that of the second embodiment in point of the upper surface thereof not striking the floor plate 1a of the operator cabin 1, whereby the operator cabin 1 is supported by shearing force of the resilient member collar portion 4k and the resilient member body portion 4f. The center shaft 4m and the floor plate 1a of the operator cabin 1 are fastened through a spacer 16 to each other by engaging the nut 10 through the lock washer 9 with the screw portion of the center shaft 4m and the upper flange 4a of the case body is fixed to the supporting frame 2b of the upper turning body 2a by the bolt 11 and the nut 12, so that a resilient supporting device of the operator cabin 1 is provided.

In a pin hole 16c formed on a radial projection 16b of the spacer 16, by engaging the pin bolt 15 with the tapped hole 1d formed on the floor plate 1a of the operator cabin 1, the pin portion of the pin bolt 15 is put and the spacer 16 is prevented rotation thereof around the center shaft 4m by a knock pin 17. Also, the upper flange portion 4a of the case body is fixed to the supporting frame 2b by the bolt 11 and the nut 12.

Next, the operation of the third embodiment will be described. When the shock absorbing device provided with the damping plate damper 4 attached to the supporting frame 2b of the upper turning body 2a is fixed to the floor plate 1a of the operator cabin 1, a bolt-circle of the spacer 16 is located relative to a screw portion of the center shaft 4m and the knock pin 17 is put in both pin holes of the spacer 16 and the center shaft 4m, whereby the spacer 16 and the center shaft 4m are assembled.

Next, the screw portion of the tip of the center shaft 4m is located relative to the hole 1e of the floor plate 1a and then, the operator cabin 1 is moved downwardly until the undersurface of the floor plate 1a contacts with the upper surface of the spacer 16. Thereafter, the pin bolt 15 is engaging from upper side with the bolt-circle 1d of the floor plate 1a, the pin portion of the pin bolt 15 is inserted in the pin hole 16c of the spacer 16 and the floor plate 1a is fastened to the center shaft 4m and the spacer 16 by engaging the nut 10 through the lock washer 9 with the screw portion of the center shaft 4m with a wrench, so that the rotation of the center shaft 4m is prevented, whereby twists of the resilient member collar portion 4k and the resilient member body portion 4f which is produced in the conventional devices can be avoided.

INDUSTRIAL APPLICABILITY

The present invention is to provide an effective resilient supporting device for resiliently supporting an operator cabin against a car body so that riding comfort for an operator with respect to the construction machines such as a hydraulic power shovel and the mechanical strength of the operator cabin can be improved.

**Claims**

1. In a resilient supporting device for resiliently supporting an operator cabin against a car body, the device wherein an operator cabin of a construction machine is placed to a car body through a shock absorbing device provided with a damping plate damper.

2. A resilient supporting device according to claim 1, wherein said shock absorbing device provided with the damping plate damper comprises a viscosity damper including:
   a case body consisting of an upper flange, a body portion and a lower flange;
   a resilient member provided with a collar, an outer surface of a body portion thereof and an undersurface of a collar portion thereof being connected to said case body;
   a center shaft connected to the central portion of said resilient member provided with the collar;
   a damping plate fixed to the bottom end portion of said center shaft; and
   a viscous substance filled up in a damper case fixed to the bottom end of said case body;
   whereby said operator cabin being fixed the upper portion of said center shaft and supported to the upper surface of the collar portion of said resilient member provided with the collar.

3. A resilient supporting device according to claim 2, wherein a lower resilient stopper is connected to said case body for controlling lower movement of said operator cabin which has a slight space to the periphery of the collar portion of said resilient member provided with the collar and an upper resilient stopper for controlling upper movement of said operator cabin is connected to the upper surface of said damping plate.

4. In a resilient supporting device for resiliently supporting an operator cabin against a car body, the device wherein a shock absorbing device provided with the damping plate damper comprises a viscosity damper including:
   a case body consisting of an upper flange, a body portion and a lower flange;
   a resilient member provided with a collar, an outer surface of a body portion thereof and an undersurface of a collar portion thereof being connected to said case body;
   a center shaft connected to the central portion of said resilient member provided with the collar;
   a damping plate fixed to the bottom end portion of said center shaft; and
   a viscous substance filled up in a damper case fixed to the bottom end of said case body;
   whereby the collar portion of said resilient member provided with a collar and said operator cabin are fixed to each other through a spacer by said center shaft and the upper flange of said case body is fixed to the car body; the improvement wherein the fit portion of said spacer and said center shaft has a width across flats and a turning prevention device for preventing twists adjacent to the center shaft of said spacer is provided.

5. In a resilient supporting device for resiliently supporting an operator cabin against a car body, the device wherein a shock absorbing device provided with the damping plate damper comprises a viscosity damper including:
   a case body consisting of an upper flange, a body portion and a lower flange;
   a resilient member provided with a collar, an outer surface of a body portion thereof and an undersurface of a collar portion thereof being connected to said case body;
   a center shaft connected to the central portion of said resilient member provided with the collar;
   a damping plate fixed to the bottom end portion of said center shaft; and
   a viscous substance filled up in a damper case fixed to the bottom end of said case body;
   whereby the collar portion of said resilient member provided with a collar and said operator cabin are fixed to each other through a spacer by said center shaft and the upper flange of said case body is fixed to the car body; the improvement wherein a knock pin is provided between said center shaft and said spacer and a turning prevention device for preventing twists adjacent to the center shaft of said spacer is provided.

FIG. 1

FIG. 2

FIG. 3

FIG. 4

EP 0 612 892 A1

F I G. 5

FIG. 6

FIG. 7

FIG. 8

FIG. 9 PRIOR ART

FIG. 10 PRIOR ART

FIG. 11   PRIOR ART

FIG. 12   PRIOR ART

14

## INTERNATIONAL SEARCH REPORT

| | International application No. |
|---|---|
| | PCT/JP92/01437 |

**A. CLASSIFICATION OF SUBJECT MATTER**

Int. Cl$^5$ E02F9/16

According to International Patent Classification (IPC) or to both national classification and IPC

**B. FIELDS SEARCHED**

Minimum documentation searched (classification system followed by classification symbols)

Int. Cl$^5$ E02F9/16

Documentation searched other than minimum documentation to the extent that such documents are included in the fields searched

| | |
|---|---|
| Jitsuyo Shinan Koho | 1926 – 1992 |
| Kokai Jitsuyo Shinan Koho | 1971 – 1992 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, Y2, 2-45881 (Sumitomo (S.H.I.) Construction Machinery Co., Ltd.), March 29, 1990 (29. 03. 90), Lines 5 to 17, page 3, Fig. 2 (Family: none) | 1-5 |
| A | JP, Y2, 60-148368 (Hitachi Construction Machinery Co., Ltd.), October 2, 1985 (02. 10. 85), Line 6, page to line 4, page 3, Fig. 3 (Family: none) | 1-5 |
| A | JP, Y2, 62-185761 (Kubota, Ltd.), November 26, 1987 (26. 11. 87), Line 19, page 3 to line 5, page 4, Fig. 1 (Family: none) | 4-5 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| January 12, 1993 (12. 01. 93) | February 9, 1993 (09. 02. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)